(19) **Europäisches Patentamt**
**European Patent Office**
**Office européen des brevets**

(11) **EP 0 501 720 B1**

(12) **EUROPEAN PATENT SPECIFICATION**

(45) Date of publication and mention
of the grant of the patent:
**29.05.1996 Bulletin 1996/22**

(51) Int. Cl.⁶: $B60C\ 9/00$, $D07B\ 1/06$

(21) Application number: **92301522.6**

(22) Date of filing: **24.02.1992**

(54) **Rubber article-reinforcing steel cords and pneumatic tires using such steel cords**

Verstärkungsstahlkabel für Elastomererzeugnisse und Luftreifen mit solchen Stahlkabeln

Câbles en acier pour le renforcement d'articles en caoutchouc en pneumatiques comportant de tels câbles

(84) Designated Contracting States:
**BE DE ES FR GB IT**

(30) Priority: **25.02.1991 JP 50292/91**
**28.11.1991 JP 314613/91**

(43) Date of publication of application:
**02.09.1992 Bulletin 1992/36**

(73) Proprietor: **BRIDGESTONE CORPORATION**
**Tokyo 104 (JP)**

(72) Inventors:
• **Yanagisawa, Manabu**
**Kodaira City, Tokyo (JP)**
• **Ikehara, Kiyoshi**
**Chofu City, Tokyo (JP)**

(74) Representative: **Whalley, Kevin et al**
**MARKS & CLERK,**
**57-60 Lincoln's Inn Fields**
**London WC2A 3LS (GB)**

(56) References cited:
**EP-A- 0 342 644**     **EP-A- 0 385 666**
**EP-A- 0 399 795**

## Description

The present invention relates to steel cords to be used as a reinforcing material for rubber articles such as pneumatic tires or industrial belts, and the invention also relates to pneumatic tires using such steel cords in belt layers.

In a rubber article reinforced with steel cords, there is a problem in that steel filaments are corroded with water penetrating the rubber article to lower service life of the product.

For example, if the steel cord used in a belt of a tire has a cavity in it, the following problem will occur. That is, when the tread of the tire undergoes an exterior cut which reaches the belt, water penetrates the belt, and spreads inside the cavity of the cord in the longitudinal direction of the steel cord. Consequently, rust resulting from the penetrating water spreads so that adhesion between the rubber and steel cord decreases as the rust spreads to produce a separation phenomenon.

Under the circumstances, in order to prevent cut separation due to propagation of the corrosion, a cord construction is proposed, in which rubber can fully penetrate into the cord through gaps among adjacent metallic filaments during vulcanization under pressure.

Japanese patent application Laid-open No. 63-235,587 discloses a pneumatic tire provided with a belt layer embedding, in rubber, steel cords which have a 2 + 7 cord construction and a tenacity of 1,700 to 2,050d$^{1.872}$ kgf/cord (d (diameter of filament) =0.28 to 0.40 mm).

Bridgestone Corporation have formerly disclosed a steel cord having a 2 + 8 cord construction, in which the diameter of each filament is in a range of 0.30 to 0.42 mm, a difference (Dc - Ds) in diameter of filament between a core and a sheath is not less than 0.4 mm, and the twisting direction of the core is the same as that of the sheath, and a pitch ratio Ps/Pc between the sheath and the core is 1.4 to 3.0, as well as pneumatic tires using such cords in a belt layer (Japanese patent application Laid-open No. 2-154,086 (& EP-A-0372959)). In this tire, cut separation of the tire is to be prevented by using rubber-permeatable type steel cords in the belt layer.

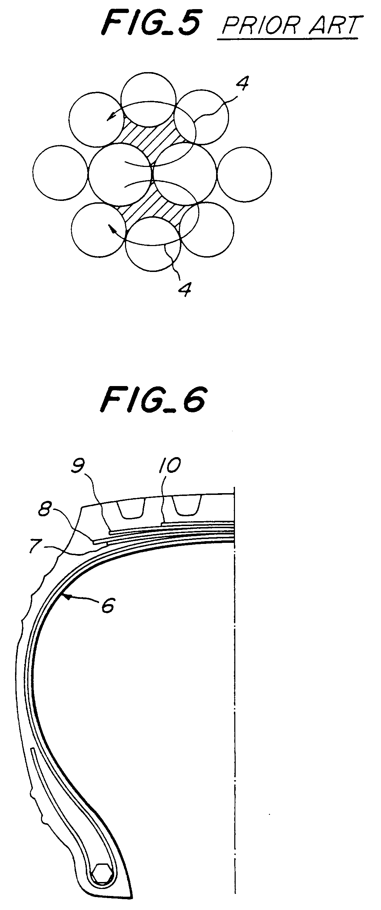

However, steel cords disclosed in Japanese patent application Laid-open Nos. 63-235,587 and 2-154,086 are not optimized in terms of "forming", so that sheath-sheath gaps great enough to allow rubber to penetrate into the cords by vulcanization under pressure cannot be realized or restraint forces for mutual filaments in the core or sheath become insufficient to cause deviation in twisting filaments of the sheath, which forms a portion where the filaments of the sheath adhere to each other to hinder penetration of rubber into the cord, as shown in Fig. 5 of the accompanying drawings. Owing to this, in the case of a pneumatic radial tire using such cords in a belt layer, that portion of the cord into which rubber does not sufficiently penetrate may appear even after vulcanization under pressure. Thus, it is not always guaranteed that cut separation resistance can be stably obtained as one of product performances for the tire.

It is an aim of the present invention to provide steel cords into which a sufficient amount of rubber can stably penetrate by vulcanization under pressure so that when such steel cords are used in a rubber article, particularly in a pneumatic radial tire, cut separation resistance can be stably obtained as one of product performances. The invention is also aimed at the provision of a pneumatic tire using such steel cords in a belt layer.

That is, the present inventors made considerable efforts to solve the above-mentioned problems, and discovered that a sufficient amount of rubber can be stably penetrated into a steel cord having a 2 + 7 or 2 + 8 cord construction by vulcanizing under pressure through appropriately forming filaments of the core and the sheath of the steel cord. The present invention has been accomplished based on this discovery.

More specifically, the present invention provides a rubber article-reinforcing steel cord having a core-sheath double layer structure having a 2 + 7 cord construction or a 2 + 8 cord construction, in which the twisting direction of the core is the same as that of the sheath, a forming rate Rc of filaments of the core is 103 to 120%, and a forming rate Rs of filaments of the sheath is 102 to 115%. The present invention also provides a pneumatic radial tire using such steel cords in a belt layer.

The invention will be further described, by way of example only, with reference is made to the accompanying drawings, wherein:

Fig. 1 is a sectional view of an embodiment of a steel cord having the 2 + 7 cord construction according to the present invention;

Fig. 2 is a sectional view of another embodiment of a steel cord having the 2 + 8 cord construction according to the present invention;

Fig. 3a is a sectional view of a core of an embodiment of a steel cord having the 2 + 8 cord construction;

Fig. 3b is a side view of one filament of this core;

Fig. 4a is a sectional view of a steel cord having a 2 + 8 cord construction according to the present invention;

Fig. 4b is a side view of a filament of a sheath of this steel cord;

Fig. 5 is a sectional view of a conventional steel cord; and

Fig. 6 is a sectional view of a left half portion of a heavy duty pneumatic radial tire.

The present invention will be explained in more detail with reference to the drawings.

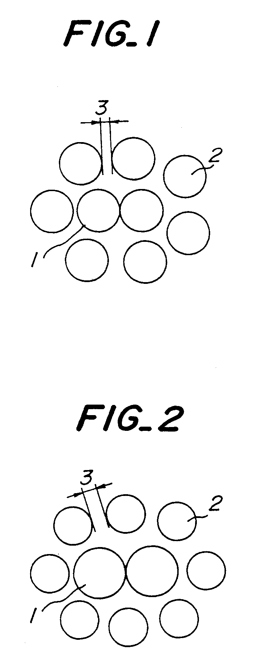

Figs. 1 and 2 show sections of embodiments of rubber article-reinforcing steel cords according to the present invention. Fig. 1 is a sectional view of a 2 + 7 cord construction in which a sheath filament has the same diameter as that of a core filament. As shown, seven sheath filaments 2 are arranged around two core filaments. Fig. 2 is a sectional view of a 2 + 8 cord construction in which a core filament has a diameter greater than that of a sheath filament. As shown, eight sheath filaments are arranged around two core filaments similarly as in Fig. 1.

The forming rate of the core filament is defined as follows:

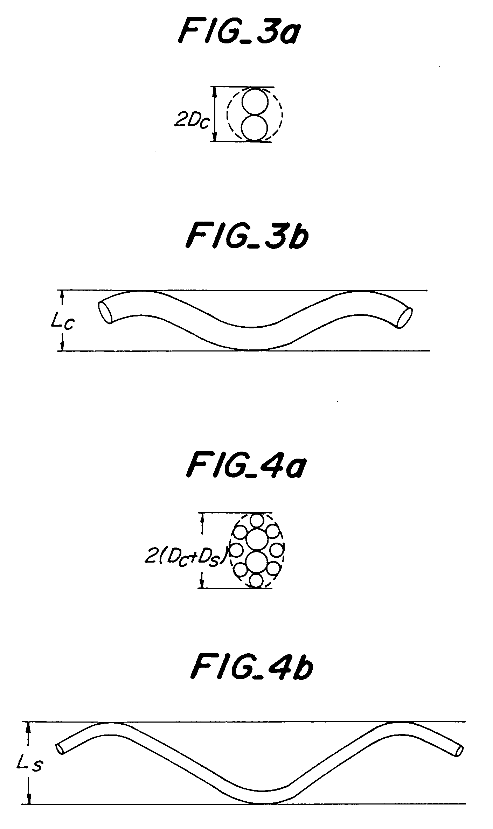

A theoretical diameter of the core is defined as 2Dc by a maximum sectional width of two core filaments closely arranged as shown in Fig. 3a. After the sheath composed of the steel cords is removed, one core filament 1 is taken out without being permanently deformed. Then, a maximum height Lc (core-formed amount) of the wavy filament as shown in Fig. 3b is measured by using a magnifying glass. The forming rate Rc of the core is defined by the following equation:

$$Rc = (Lc/2Dc) \times 100 \ (\%)$$

The forming rate of the sheath filament is defined as follows:

A theoretical diameter of the sheath is defined as 2(Dc + Ds) by a maximum sectional width of the sheath and core filaments closely arranged in series as shown in Fig. 4a. One sheath filament of the steel cord is taken out without being permanently deformed. Then, a maximum height Ls (sheath-formed amount) of the wavy filament as shown in Fig. 4b is measured by using a magnifying glass. The forming rate Rs of the sheath is defined by the following equation:

$$Rs = [(Ls/2(Dc + Ds)] \times 100 \ (\%)$$

In the present invention, the content of carbon in the steel cord is preferably from 0.80 to 0.85% by weight, when the cord is applied to a belt layer in a heavy duty pneumatic radial tire such as a bus or a truck.

Further, according to the present invention, it is preferable to employ the 2 + 8 cord construction from the standpoint of increasing specific strength of the steel cord and reducing the weight of a rubber product.

The reason why the steel cord-twisted construction is limited to the core-sheath double layer structure having the 2 + 7 or 2 + 8 two-layer cord construction is that the 2 + 7 cord construction or the 2 + 8 cord construction is the most suitable among the 2 + n cord constructions as a cord construction which advantageously allows rubber to sufficiently penetrate into gaps between the filaments of the sheath in the steel cord and is advantageous in terms of specific strength and fatigue resistance.

That is, if the twisted construction is a cord construction of 2+6 or less, sufficient gaps can be ensured to penetrate rubber into the cord. However, in order to obtain the same cord tenacity as that of the 2+7 or 2+8 cord construction, it is necessary to increase the diameter of the filaments as compared with the 2 + 8 cord construction. This deteriorates specific strength and fatigue resistance. On the other hand, if the twisted struction is the 2 + 9 cord construction, filaments are likely to adhere to one another due to the greater number of the sheath filaments, even when the cord is formed. Consequently, rubber cannot sufficiently penetrate into the cord.

Further, according to the present invention, it is necessary to twist the filaments in the core in the same direction as that in the sheath. The reason is that if the twisting direction differs between the filaments in the core and those in the sheath, the contact pressure among the filaments becomes greater as compared with the twisting in the same direction. Accordingly, fretting is likely to occur, fatigue resistance greatly drops, and tenacity-maintaining percentage is also lowered.

Further, the reason why the forming rates of the filaments of the sheath and the core in the steel cord are limited as mentioned above is as follows:

If the forming rate of the filaments of the sheath is less than 102%, the gaps between the adjacent filaments of the sheath are so narrow that it is likely that a portion is formed where sufficient rubber does not penetrate into the the cord. On the other hand, if the forming rate of the filaments is more than 115%, the gaps between adjacent filaments in the sheath are so great that the sheath filaments closely adhere to one another without being restrained by the core. Consequently, a portion where no rubber penetrates (as illustrated by a shadowed portion in Fig. 5) is likely to be formed.

On the other hand, if the forming rate of the core filament is less than 103%, the sheath cannot be sufficiently restrained. Consequently, as shown in Fig. 5, there is the possibility that an annular closed space into which no rubber penetrates is formed. On the other hand, if the forming rate of the core filaments is more than 120%, problems such as bending deformation of the cords are likely to occur in the production of the cord.

The forming rate Rc of the filaments in the core is preferably 103 to 115%, and the forming rate of the filaments of the sheath is preferably 102 to 108%.

In order to attain greater mutual restraint forces for the sheath and the core, the forming rate Rc of the filaments of the core and the forming rate Rs of the filaments of the sheath preferably satisfies the relationship: Rc $\geq$ Rs. Further, it is most preferable that Rc > Rs.

Further, it is preferable that the diameter Dc of the filament of the core and the diameter Ds of the filament of the sheath are within a range of 0.26 to 0.42 mm. More preferably, $Dc = Ds$ in the case of the 2 + 7 cord construction, and $Dc - Ds \geq 0.06$ mm in the case of the 2 + 8 cord construction.

It is preferred that the diameter of the filaments is 0.40 mm and 0.34 mm for the core and the sheath, respectively; that the pitch of the filaments is $Pc = 5$ to 14 mm and $Ps = 12$ to 30 mm for the core and the sheath, respectively; and that the ratio $Ps/Pc$ between the pitch of the filaments of the sheath and the pitch of the filaments of the core is in a range of 1.8 to 2.2.

The steel cords according to the present invention can be suitably used for the belt layer of a pneumatic radial tire.

Next, the present invention will be explained in more detail with reference to specific embodiments.

Heavy duty pneumatic radial tires 6 having a size of 1000 R 20 as shown in Fig. 6 were used as rubber articles for evaluating steel cords. The tire possessed four belt plies 7 through 10, and test steel cords were used in second and third belt plies 8 and 9. The cord-arrayed angle was 20° toward the right side and 20° toward the left side from the circumferential direction for the second and third belt plies, respectively. The number of cords per 5 cm was 18.6 for both the second and third belt plies.

The forming rate and the corrosion-propagating resistance of the steel cord, and cut separation resistance of the tire were determined or evaluated as follows.

Forming rate of the steel cord:

A rubberized steel cord taken out from the belt layer of a tire was immersed into nitrobenzene, and was boiled for 2 to 3 hours to completely peel off rubber. Then, the forming ratio was determined according to the above-mentioned definition. At that time, opposite ends of the steel cord were bent before removing the rubber to prevent unwinding of the cord, and the measurement was effected at a location of the cord upon which the bending had no influence.

Corrosion-propagating resistance:

Corrosion-propagating resistance was examined according to a cut end corrosion (CEC) test method. That is, a surface of a rubberized steel cord taken out from a belt ply of a tire was coated with a silicon sealant, and after drying, opposite ends of the cord were cut off to give a sample having a length of about 10 cm. After one end of the cord sample was immersed into a 10% aqueous solution of sodium hydroxide for 24 hours, the cord was taken out from the solution, and a length by which the rubber peeled off was measured from the end of the cord. Totally ten to thirty cords ($N = 10$ to 30) were tested, and their variations and absolute levels thereof were evaluated for comparison by using a difference between a minimum value and a maximum value and a central median value.

Cut separation resistance:

Cut separation resistance was evaluated according to a corrosion-propagating drum test method. That is, holes were formed by a drill at three locations in each of twelve kinds of tires prepared by trial to reach a second or third belt ply counted from an inner surface of the tire, and water was sealingly charged into a tire tube. Then, the tire was assembled onto a rim. Then, the tire was run on a drum over 20,000 km, and the tire was decomposed. Cut separation resistance was evaluated by a maximum peeled length of an adhesive due to corrosion of the cord.

Specification of the cords and evaluation results are shown in Tables 1 and 2.

Table 1

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Specification of cord | Cord construction | | 2+6 | 2+7 | 2+7 | 2+8 | 2+8 | 2+8 | 2+8 | 2+9 |
| | Filament diameter (mm) | Core | 0.23 | 0.37 | 0.37 | 0.40 | 0.40 | 0.40 | 0.40 | 0.44 |
| | | Sheath | 0.23 | 0.37 | 0.37 | 0.34 | 0.34 | 0.34 | 0.34 | 0.30 |
| | Twisting pitch (mm) | Core | 6 | 8 | 8 | 8 | 8 | 8 | 8 | 8 |
| | | Sheath | 12 | 16 | 16 | 16 | 16 | 16 | 16 | 16 |
| | Twisting direction | Core | S | S | S | S | S | S | Z | S |
| | | Sheath | S | S | S | S | S | S | S | S |
| | Forming rate (%) | Core | 100 | 104 | 100 | 100 | 100 | 100 | 105 | 105 |
| | | Sheath | 100 | 100 | 106 | 93 | 105 | 114 | 105 | 105 |
| | Carbon content (%) | | 0.82 | 0.82 | 0.82 | 0.82 | 0.82 | 0.82 | 0.82 | 0.82 |
| Evaluation results | Resistance to corrosion propagation (CEC method) median (minimum ~ maximum (mm)) | | 40 (10~70) | 40 (10~70) | 35 (10~60) | 55 (10~100) | 45 (5~85) | 57.5 (15~100) | 100 (all 100) | 80 (60~100) |
| | Cut separation resistance (peeled length of adhesive (mm)) | | 60 | 60 | 50 | 200 | 70 | 90 | 400 | 300 |

Table 2

| | | Example 1 | Example 2 | Example 3 | Example 4 | Example 5 | Example 6 |
|---|---|---|---|---|---|---|---|
| Specification of cord | Cord construction | 2+7 | 2+8 | 2+8 | 2+8 | 2+8 | 2+8 |
| | Filament diameter (mm) Core | 0.37 | 0.40 | 0.40 | 0.40 | 0.40 | 0.40 |
| | Filament diameter (mm) Sheath | 0.37 | 0.34 | 0.34 | 0.34 | 0.34 | 0.34 |
| | Twisting pitch (mm) Core | 8 | 8 | 8 | 8 | 8 | 8 |
| | Twisting pitch (mm) Sheath | 16 | 16 | 16 | 16 | 16 | 16 |
| | Twisting direction Core | S | S | S | S | S | S |
| | Twisting direction Sheath | S | S | S | S | S | S |
| | Forming rate (%) Core | 112 | 106 | 112 | 104 | 108 | 107 |
| | Forming rate (%) Sheath | 105 | 104 | 105 | 106 | 107 | 110 |
| | Carbon content (%) | 0.82 | 0.82 | 0.82 | 0.82 | 0.82 | 0.82 |
| Evaluation results | Resistance to corrosion propagation (CEC method) median (minimum ~ maximum (mm)) | 18 (6~30) | 10 (5~15) | 12.5 (5~20) | 17.5 (10~25) | 20 (5~35) | 20 (10~30) |
| | Cut separation resistance (peeled length of adhesive (mm)) | 16 | 10 | 15 | 30 | 18 | 35 |

As is shown from the evaluation results shown in Tables 1 and 2, according to the rubber article-reinforcing steel cord of the present invention, since the filaments of the core and the filaments of the sheath in the 2 + 7 cord construction or the 2 + 8 cord construction are appropriately formed, the weight of a composite body in which the steel cords are combined with rubber in a rubberized cloth shape can be suppressed, and stable corrosion-propagating resistance can be obtained, when tenacity of the cords are made uniform.

Furthermore, when the above steel cords are used in a belt layer of a heavy duty pneumatic radial tire, sufficient internal pressure-maintaining property can be ensured and stable cut separation resistance can be obtained, even when the steel cords are used in the inner belt layer of a heavy duty pneumatic radial tire. Such effects are particularly favourable in the case of the 2 + 8 cord construction.

## Claims

1. A steel cord having a core-sheath double layer structure having a 2 + 7 cord construction or a 2 + 8 cord construction, in which the twisting direction of the core is the same as that of the sheath, characterized in that the forming rate $Rc$ of the filaments (1) of the core is 103 to 120%, and the forming rate $Rs$ of the filaments (2) of the sheath is 102 to 115%.

2. A steel cord as claimed in claim 1, characterized in that the content of the carbon in the steel cord is from 0.80 to 0.85% by weight.

3. A steel cord as claimed in claim 1 or 2, characterized by having the 2 + 8 cord construction.

4. A steel cord as claimed in any of claims 1 to 3, characterized in that the forming rate $Rc$ of the filaments in the core is 103 to 115%.

5. A steel cord as claimed in any of claims 1 to 4, characterized in that the forming rate $Rs$ of the filaments of the sheath is 102 to 108%.

6. A steel cord as claimed in any of claims 1 to 5, characterized in that the forming rate $Rc$ of the filaments of the core and the forming rate $Rs$ of the filaments of the sheath satisfies the relationship: $Rc$ is greater than or equal to $Rs$.

7. A steel cord as claimed in claim 6, characterized in that $Rc$ is greater than $Rs$.

8. A steel cord as claimed in any of claims 1 to 7, characterized in that the diameter $Dc$ of the filament of the core and the diameter $Ds$ of the filament of the sheath are within a range of 0.26 to 0.42 mm.

9. A steel cord as claimed in any of claims 1 to 8, characterized in that $Dc = Ds$ in the case of the 2 + 7 cord construction, and $Dc - Ds$ is greater than or equal to 0.06 mm in the case of the 2 + 8 cord construction.

10. A steel cord as claimed in any of claims 1 to 9, characterized in that the diameter of the filaments of the core and of the sheath is 0.40 mm and 0.34 mm respectively; the pitch of the filaments of the core and of the sheath is $Pc =$ 5 to 14 mm and $Ps =$ 12 to 30 mm respectively; and the ratio $Ps/Pc$ between the pitch of the filaments of the sheath and the pitch of the filaments of the core is in a range of 1.8 to 2.2.

11. A pneumatic tire having in a belt layer thereof steel cords as claimed in any of claims 1 to 10.

## Patentansprüche

1. Stahlcordfaden, der eine Seele/Mantel-Doppelschichtstruktur hat, die eine Bauweise mit 2 + 7 Cordfäden oder 2 + 8 Cordfäden aufweist, wobei die Verdrillrichtung bei der Seele die gleiche wie bei dem Mantel ist, dadurch gekennzeichnet, daß das Formungsverhältnis $Rc$ der Filamente (1) der Seele 103 bis 120% beträgt, und das Formungsverhältnis $Rs$ der Filamente (2) des Mantels 102 bis 115% beträgt.

2. Stahlcordfaden gemäß Anspruch 1, dadurch gekennzeichnet, daß der Kohlenstoffgehalt des Stahlcordfadens 0,80 bis 0,85 Gewichtsprozent beträgt.

3. Stahlcordfaden gemäß Anspruch 1 oder 2, dadurch gekennzeichnet, daß er die Bauweise mit 2 + 8 Cordfäden aufweist.

4. Stahlcordfaden gemäß irgendeinem der Ansprüche 1 bis 3, dadurch gekennzeichnet, daß das Formungsverhältnis $Rc$ der Filamente der Seele 103 bis 115% beträgt.

EP 0 501 720 B1

**5.** Stahlcordfaden gemäß irgendeinem der Ansprüche 1 bis 4, dadurch gekennzeichnet, daß das Formungsverhältnis Rs der Filamente des Mantels 102 bis 108% beträgt.

**6.** Stahlcordfaden gemäß irgendeinem der Ansprüche 1 bis 5, dadurch gekennzeichnet, daß das Formungsverhältnis Rc der Filamente der Seele und das Formungsverhältnis Rs der Filamente des Mantels die Beziehung: Rc größer als, oder gleich Rs erfüllen.

**7.** Stahlcordfaden gemäß Anspruch 6, dadurch gekennzeichnet, daß Rc größer als Rs ist.

**8.** Stahlcordfaden gemäß irgendeinem der Ansprüche 1 bis 7, dadurch gekennzeichnet daß der Durchmesser Dc des Filaments der Seele und der Durchmesser Ds des Filaments des Mantels innerhalb des Bereichs von 0,26 bis 0,42 mm liegen.

**9.** Stahlcordfaden gemäß irgendeinem der Ansprüche 1 bis 8, dadurch gekennzeichnet, daß in dem Fall der Bauweise mit 2 + 7 Cordfäden Dc = Ds ist, und in dem Fall der Bauweise mit 2 + 8 Cordfäden Dc - Ds größer als, oder gleich 0,06 mm ist.

**10.** Stahlcordfaden gemäß irgendeinem der Ansprüche 1 bis 9, dadurch gekennzeichnet, daß der Durchmesser der Filamente der Seele und des Mantels 0,40 mm bzw, 0,34 mm beträgt; die Steigung der Filamente der Seele und des Mantels Pc = 5 bis 14 mm bzw. Ps = 12 bis 30 mm beträgt; und das Verhältnis Ps/Pc der Steigung der Filamente des Mantels zu der Steigung der Filamente der Seele in dem Bereich von 1,8 bis 2,2 liegt.

**11.** Luftreifen, der in einer Gürtelschicht Stahlcordfäden gemäß irgendeinem der Ansprüche 1 bis 10 hat.

**Revendications**

**1.** Câblé en acier ayant une structure double noyau-gaine avec une configuration à 2 + 7 câblés ou une configuration à 2 + 8 câblés, dans lequel le sens de torsion du noyau est le même que celui de la gaine, caractérisé en ce que le taux de déformation Rc des filaments (1) du noyau est compris entre 103 et 120%, le taux de déformation des filaments (2) de la gaine étant compris entre 102 et 115%.

**2.** Câblé en acier selon la revendication 1, caractérisé en ce que la teneur en carbone du câblé en acier représente de 0,80 à 0,85% en poids.

**3.** Câblé en acier selon les revendications 1 ou 2, caractérisé par une configuration à 2 + 8 câblés.

**4.** Câblé en acier selon l'une quelconque des revendications 1 à 3, caractérisé en ce que le taux de déformation Rc des filaments dans le noyau est compris entre 103 et 115%.

**5.** Câblé en acier selon l'une quelconque des revendications 1 à 4, caractérisé en ce que le taux de déformation Rs des filaments de la gaine est compris entre 102 et 108%.

**6.** Câblé en acier selon l'une quelconque des revendications 1 à 5, caractérisé en ce que le taux de déformation Rc des filaments du noyau et le taux de déformation Rs des filaments de la gaine satisfont à la relation selon laquelle Rc est supérieur ou égal à Rs.

**7.** Câblé en acier selon la revendication 6, caractérisé en ce que Rc est supérieur à Rs.

**8.** Câblé en acier selon l'une quelconque des revendications 1 à 7, caractérisé en ce que le diamètre Dc du filament du noyau et le diamètre Ds du filament de la gaine sont compris dans un intervalle allant de 0,26 à 0,42 mm.

**9.** Câblé en acier selon l'une quelconque des revendications 1 à 8, caractérisé en ce que Dc = Ds dans le cas d'une configuration à 2 + 7 câblés, et en ce que Dc - Ds est supérieur ou égal à 0,06 mm dans le cas d'une configuration à 2 + 8 câblés.

**10.** Câblé en acier selon l'une quelconque des revendications 1 à 9, caractérisé en ce que le diamètre des filaments du noyau et de la gaine correspond respectivement à 0,40 mm et à 0,34 mm; en ce que le pas des filaments du noyau et de la gaine correspond respectivement à Pc = 5 à 14 mm et à Ps = 12 à 30 mm; et en ce que le rapport Ps/Pc entre le pas des filaments de la gaine et le pas des filaments du noyau est compris dans un intervalle allant de 1,8 à 2,2.

11. Pneumatique comportant dans une de ses couches de ceinture des câblés en acier selon l'une quelconque des revendications 1 à 10.

## FIG_1

## FIG_2

# FIG_3a

$2D_C$

# FIG_3b

$L_C$

# FIG_4a

$2(D_C + D_S)$

# FIG_4b

$L_S$

# FIG_5 PRIOR ART

# FIG_6